# EUROPÄISCHE PATENTANMELDUNG

(11) **EP 4 277 061 A1**
(43) Veröffentlichungstag der Anmeldung: **15.11.2023**
(21) Anmeldenummer: 23172396.6
(22) Anmeldetag: 09.05.2023
(51) Int. Cl.: H02G 3/04, H02G 3/00

(54) **KABELTRAGSYSTEM SOWIE TRAGVORRICHTUNG DAFÜR**

(30) Priorität: 11.05.2022 DE 202022102556 U
(71) Anmelder: OBO Bettermann Produktion Deutschland GmbH & Co.KG, 58710 Menden (DE)
(72) Erfinder: Große Gehling, Andreas, 58710 Menden (DE)
(74) Vertreter: Haverkamp Patentanwälte PartG mbB

(57) **Zusammenfassung**

Die Erfindung betrifft ein Kabeltragsystem 1 umfassend einen in eine Leitrichtung 5 ausgerichteten Kabelträger 2 und zumindest zwei den Kabelträger 2 abstützende Tragvorrichtungen 3, 4, wobei an den Tragvorrichtungen 3, 4 zumindest zwei hinterschnittene Aufnahmen 6, 6.1, 6.2, 6.3, 6a; 7, 7.2, 7.3 vorgesehen sind und wobei der Kabelträger 2 zwei Klemmabschnitte 14, 14.1; 15, 15.1 aufweist, die in jeweils eine Aufnahme 6, 6.1, 6.2, 6.3, 6a; 7, 7.2, 7.3 eingreifen, wobei die Hinterschnitte 12, 12.1, 12a; 13, 13.1 der Aufnahmen 6, 6.1, 6.2, 6.3, 6a; 7, 7.2, 7.3 die Klemmabschnitte 14, 14.1; 15, 15.1 jeweils entgegen der vorgesehenen Montagerichtung 16 zum Befestigen des Kabelträgers 2 an der Tragvorrichtung 3, 4 zumindest abschnittsweise überragen und eine erste Aufnahme 6, 6.1, 6.3, 6a einen in eine erste Richtung weisenden Hinterschnitt 12, 12.1, 12a und eine zweite Aufnahme 7, 7.1, 7.2, 7.3 einen in eine zweite, zu der ersten Richtung entgegengesetzten Richtung weisenden Hinterschnitt 13, 13.1 aufweist.

## Beschreibung

Die Erfindung betrifft ein Kabeltragsystem.

Kabeltragsysteme dienen dem Tragen von Kabeln und Leitungen im Raum, typischerweise in einem Gebäude. Zum Tragen von Kabeln und Leitungen verfügt ein Kabeltragsystem über einen Kabelträger, in den die Kabel und Leitungen geführt bzw. gelegt werden. Ein Kabelträger wird typischerweise aus ein oder mehreren Kabelträgersegmenten gebildet, die hintereinander in der Leitrichtung des Kabelträgers, mithin der Längserstreckungs- bzw. Verlaufsrichtung des Kabelträgers, angeordnet sind. Ein Kabelträger kann im Querschnitt U-förmig, C-förmig oder in Kombination mit einem Deckel geschlossen sein. Er kann etwa als Kabelrinne, Kabelleiter, Gitterkabelrinne oder Kabelkanal ausgestaltet sein, wobei die Erfindung hierauf nicht beschränkt ist.

Ein Kabelträger ist gegenüber der Schwerkraft abgestützt; typischerweise ist eine Wand oder Deckenmontage vorgesehen. Zum Abstützen des Kabelträgers verfügt das Kabeltragsystem über zumindest zwei, typischerweise über eine Vielzahl voneinander beabstandeter Tragvorrichtungen. Die Tragvorrichtungen können etwa als seitlich an einer Wand oder Hängestielen befestigte Ausleger oder als von einer Decke herabhängende Sprossen/Stiele ausgebildet sein. Bei der Montage eines solchen Kabeltragsystems werden typischerweise zunächst die Tragvorrichtungen montiert und anschließend der Kabelträger an den Tragvorrichtungen befestigt.

Zur Befestigung des Kabelträgers an der Tragvorrichtung sind zusätzliche Befestigungselemente, die Kabelträger mit der Tragvorrichtung verbindend, bekannt, wie sie beispielsweise in ES 1 071 943 U offenbart sind.

Des Weiteren sind Tragvorrichtungen bekannt, die Aufnahmen für Abschnitte der Kabelträger aufweisen, welche Abschnitte in die Aufnahmen eingreifen. Zum Fixieren der Kabelträger an der Tragvorrichtung werden bei der Montage anschließend den Aufnahmen zugeordnete Verschlusslaschen auf- oder umgebogen, sodass die Aufnahmen entgegen der Montagerichtung verschlossen werden. Eine solche Ausgestaltung zeigen beispielsweise EP 2 378 620 B1 und EP 2 808 964 B1.

Problematisch bei diesen vorbekannten Ausgestaltungen ist der hohe Montageaufwand: Müssen zusätzliche Elemente montiert oder Verschlusslaschen umgebogen werden, ist dies nicht nur aufwendig sondern auch insofern fehleranfällig, als das bei einer großen Anzahl an Montageschritten nicht sichergestellt ist, dass tatsächlich alle notwendigen Verschlusslaschen entsprechend umgebogen sind.

Aufgabe der Erfindung ist es vor diesem Hintergrund, ein Kabeltragsystem sowie eine dazugehörige Tragvorrichtung vorzuschlagen, mit dem ein vereinfachtes Montageverfahren ermöglicht ist.

Gelöst wird diese Aufgabe durch ein eingangs genanntes, gattungsgemä-ßes Kabeltragsystem umfassend einen in eine Leitrichtung ausgerichteten Kabelträger und zumindest zwei den Kabelträger abstützende Tragvorrichtungen, wobei an den Tragvorrichtungen zumindest zwei hinterschnittene Aufnahmen vorgesehen sind und wobei der Kabelträger zwei Klemmabschnitte aufweist, die in jeweils eine Aufnahme eingreifen, wobei die Hinterschnitte der Aufnahmen die Klemmabschnitte jeweils entgegen der vorgesehenen Montagerichtung zum Befestigen des Kabelträgers an der Tragvorrichtung zumindest abschnittsweise überragen und eine erste Aufnahme einen in eine erste Richtung weisenden Hinterschnitt und eine zweite Aufnahme einen in eine zweite, zu der ersten Richtung entgegengesetzten Richtung weisenden Hinterschnitt aufweist.

Die tragvorrichtungsbezogene Aufgabe wird gelöst durch eine Tragvorrichtung für ein Kabelsystem mit den Merkmalen des Anspruchs 17.

Vorteilhafte Ausgestaltungen ergeben sich aus den abhängigen Ansprüchen und der Beschreibung.

Erfindungsgemäß ist vorgesehen, dass der Kabelträger Klemmabschnitte aufweist, die in tragvorrichtungsseitige Aufnahmen eingreifen. Die tragvorrichtungsseitigen Aufnahmen sind entgegen der vorgesehenen Montagerichtung hinterschnitten. In einer ersten Aufnahme weist dieser Hinterschnitt in eine erste Richtung, während in einer zweiten, von der ersten Aufnahme beabstandeten Aufnahme der Hinterschnitt in eine entgegengesetzte Richtung weist. Die Aufnahmen können um die Montagerichtungsachse spiegelbildlich ausgestaltet sein. Sind die Klemmabschnitte in die Aufnahme eingesetzt, überragen die Hinterschnitte die Klemmabschnitte zumindest abschnittsweise, sodass die Klemmabschnitte hinter den Hinterschnitten in der Aufnahme entgegen der Montagerichtung formschlüssig gehalten sind. Typischerweise überragen die Hinterschnitte die Klemmabschnitte nur abschnittsweise, um die Montage zu vereinfachen. Typischerweise sind wenige zehntel Millimeter bis Millimeter ausreichend. Entsprechend weit ist auch der Hinterschnitt ausgestaltet. Die Hinterschnitte und die Klemmabschnitte sind dergestalt ausgebildet, dass eine Befestigung des Kabelträgers auf der Tragvorrichtung, respektive ein Einbringen der Klemmabschnitte hinter die jeweiligen Hinterschnitte möglich ist. Hierbei kann etwa auf die geometrische Formgebung und/oder die Materialelastizität der Klemmabschnitte, der Anbindung der Klemmabschnitte an dem Kabelträger, der Aufnahme und/oder des die Aufnahme umgebenden Materials der Tragvorrichtung zurückgegriffen werden.

Die Konturen der Aufnahmen ergeben - auch wenn sie voneinander beabstandet angeordnet sind - in Verbindung mit dem vorgesehenen Abstand der Klemmabschnitte an dem Kabelträger gemeinsam durch die entgegengesetzten, sich ergänzenden Hinterschnitte eine entgegen der Montagerichtung formschlüssige Aufnahme für die Klemmabschnitte. Die Klemmabschnitte sind in ihrer vorgesehenen Lage durch ihre feste Verbindung zueinander über den Kabelträger hinter den Hinterschnitten, wenn montiert, gehalten.

Durch diese Anordnung ist ein einfach zu montierendes, gleichzeitig den Kabelträger fest an der Tragvorrichtung bzw. den Tragvorrichtungen fixierendes System bereitgestellt, bei dem keine zusätzlichen Elemente montiert oder Sicherungslaschen zum Verriegeln zusätzlich manuell umgebogen werden müssen. Die Montagezeit wird somit insgesamt stark verkürzt und - da eine Verriegelung in Montagerichtung erfolgt - sicherer in ihrem Ergebnis gestaltet. Die Montagerichtung ist typischerweise von oben, insbesondere dann, wenn die Tragvorrichtung(en) den Kabelträger unterseitig abstützt; der Kabelträger liegt dann auf den Tragvorrichtungen auf.

Vorzugsweise beschränken die Aufnahmen eine Bewegung der Klemmabschnitte in zwei Freiheitsgraden, nämlich einerseits entgegen der Montagerichtung und andererseits quer hierzu. Typischerweise ist eine translatorische Bewegung in Leitrichtung des Kabelträgers durch die Verbindung "Aufnahme-Klemmabschnitt" nicht blockiert. Hierdurch wird ein Toleranzfeld bereitgestellt, welches der segmentierten Bauweise des Kabelträgers gerecht wird und auf individuelle räumliche Gegebenheiten bezüglich der Tragvorrichtungsmontage, respektive des Abstandes der Tragvorrichtungen in Leitrichtung zueinander, Rücksicht nimmt. Dagegen ist der Kabelträger gegen ein seitliches Verrücken und somit auch gegen ein seitliches Herabfallen von den Tragvorrichtungen gesichert.

Gleichwohl ist es alternativ oder auch ergänzend denkbar, ein Kabeltragsystem bereitzustellen, bei dem die Anordnung "Aufnahme-Klemmabschnitt" gegenüber der vorstehend beschriebenen um die Montagerichtung herum gedreht ist. So kann der Hinterschnitt auch in Leitrichtung weisen. Der Aufnahmerücken begrenzt dann eine translatorische Bewegung in Leitrichtung des Kabelträgers.

Der Teil der Aufnahme, die den Hinterschnitt bereitstellt, weist typischerweise entgegen der Richtung, in die der Aufnahmerücken - die Verbindung zwischen Aufnahmegrund und Hinterschnitt - eine Bewegung des eingesetzten Klemmabschnittes unterbindet, wenngleich eine diesbezüglich winklige Ausrichtung dieses Teils, etwa in einem 45°-Winkel gegenüber dem Aufnahmerücken, denkbar ist.

Bevorzugt ist vorgesehen, dass zumindest eine Aufnahme, typischerweise beide Aufnahmen, in einen Blechabschnitt des oder der Tragvorrichtungen eingebracht ist. Typischerweise durchgreift die Aufnahme den Blechabschnitt, sodass der Klemmabschnitt quer zu dem Blechabschnitt in der Aufnahme gehalten ist. Die Mantelfläche der Aufnahme wird durch die Schmalseite des Bleches bereitgestellt. Bevorzugt ist vorgesehen, dass die flächige Erstreckung des Blechabschnittes im Wesentlichen in Montagerichtung weist, etwa quer zur Leitrichtung. Ein entsprechend orientierter Blechabschnitt weist ein großes Widerstandsmoment aufgrund seiner flächigen Erstreckung entgegen der Montagerichtung auf, sodass die Tragvorrichtung, respektive der Bereich der Tragvorrichtung, in dem die Aufnahme angeordnet ist, starr gegenüber der vorgesehenen Montagerichtung ist. Dies vereinfacht die Montage. Typischerweise ist vorgesehen, die Tragvorrichtung insgesamt aus einem Blech zu fertigen, etwa profiliert als L-, U- oder C-Profil. Ein solches Tragvorrichtungsprofil ist insbesondere als Ausleger äußerst stabil. Die zuvor beschriebenen Aufnahmen können auf einfache Weise in die Schenkel der Profile eingebracht werden.

Ist die Aufnahme in einen Blechabschnitt eingebracht, ist sie selbst bevorzugt L-förmig: Ein erster Abschnitt der Aufnahme ist durch den Hinterschnitt hinterschnitten, ein weiterer Abschnitt ist nicht hinterschnitten. Bei der Montage wird der Klemmabschnitt in die Aufnahme durch den nicht hinterschnittenen Teil eingebracht und kommt anschließend hinter dem Hinterschnitt - und damit entgegen der Montagerichtung fixiert - zu liegen. Durch das Bereitstellen der Aufnahme durch ein einheitlich orientiertes Blech wird die Stabilität der Befestigung insgesamt erhöht.

Zur Verringerung einer Kerbwirkung kann vorgesehen sein, dass die Aufnahme, in der der Klemmabschnitt nach der Montage zu liegen kommt, kreisbogenförmig ausgebildet ist. Der Hinterschnitt geht in den restlichen Teil der Aufnahme gebogen über.

Eine solche Ausgestaltung ist insbesondere vorteilhaft, wenn - was grundsätzlich auch vorgesehen sein kann - der Klemmabschnitt in seinem Querschnitt kreisrund ist, etwa aus einem Drahtabschnitt gefertigt. Dieser ist durch die vorstehend beschriebene Ausgestaltung des Hinterschnittes respektive der Aufnahme ideal fixiert.

Ferner kann vorgesehen sein, dass der Klemmabschnitt in die Aufnahme lose eingepasst ist, sodass während der Montage des Klemmabschnittes in der jeweiligen Aufnahme kein form- und/oder reibschlüssiger Kontakt zwischen Aufnahme und Klemmabschnitt besteht. Die lichte Weite der Aufnahme ist dann größer als der entsprechende Durchmesser des Klemmabschnittes. Dies vereinfacht die Montage weiter. Insbesondere kann die Aufnahme auf diese Weise in die Richtung, in die der Hinterschnitt den jeweiligen Klemmabschnitt fixiert, mithin der Hinterschnitt selbst, steif ausgeführt sein, was sie insbesondere ist, wenn sie in ein entsprechend orientiertes Blech eingebracht ist.

Unterstützt werden kann der Montagevorgang ferner, wenn der Hinterschnitt zumindest einer Aufnahme zur Montagerichtung weisend und in Richtung der vorgesehenen Bewegung der Klemmabschnitte um den Hinterschnitt herum eine Einführschräge aufweist, die eine Bewegung der Klemmabschnitte des Kabelträgers relativ zueinander entsprechend unterstützt.

Um eine gefertigte Tragvorrichtung zur Befestigung sich bezüglich ihrer Klemmabschnitte unterscheidender Kabelträger zu nutzen, wobei sich die Klemmabschnitte typischerweise in ihrem Querschnitt unterscheiden, kann vorgesehen sein, Aufnahmen zu kombinieren. Eine kombinierte Aufnahme zweier Aufnahmen, eine sogenannte Universalaufnahme, ist somit zweigliedrig aufgebaut, aufweisend zwei Hinterschnitte. Während der erste Hinterschnitt und die und die dazugehörige Aufnahme für einen Klemmabschnitt einer ersten Ausgestaltung (etwa eines größeren Durchmessers) dimensioniert sind, ist die weitere, sich an die erste Aufnahme anschließende Aufnahme mit ihrem Hinterschnitt dazu ausgebildet, einen Klemmabschnitt einer zweiten Ausgestaltung (etwa mit einem kleineren Durchmesser) aufzunehmen und entsprechend dimensioniert. Bei der Montage wird der Klemmabschnitt der zweiten Ausgestaltung zunächst durch die Aufnahme für den Klemmabschnitt erster Art hindurchgeführt und anschließend in der weiteren Aufnahme fixiert. So können zwei erste Aufnahmen und analog hierzu zwei zweite Aufnahmen in zwei Universalaufnahmen zusammengefasst werden. Selbstverständlich können noch weitere Aufnahmen in eine Universalaufnahme integriert werden. Durch das Bereitstellen zweier oder mehrerer Aufnahmen in einer Universalaufnahme können diese herstellungsseitig gemeinsam toleriert bereitgestellt werden, ohne dass zusätzliche Prozessschritte oder Werkzeugkosten notwendig wären.

Die Anordnung der ersten Aufnahme zu der zweiten Aufnahme - sei die erste und die zweite Aufnahme als Universalaufnahme ausgestaltet oder nicht - ist für die Montageart und die Ausgestaltung sowohl der Klemmabschnitte als auch der Aufnahmen von Bedeutung. Eine Vielzahl von möglichen Konfigurationen ist denkbar. So kann beispielsweise vorgesehen sein, dass die beiden Aufnahmen quer zur Leitrichtung nebeneinander, etwa mit dem Aufnahmerücken eine translatorische Bewegung in Querrichtung unterbindend, angeordnet sind. Die beiden Aufnahmen können so auch in einer Ebene quer zur Leitrichtung angeordnet sein. Dann sind auch die Klemmabschnitte entsprechend bezogen auf die Leitrichtung nebeneinander an dem Kabelträger angeordnet. Die Aufnahmerücken können in einer Weiterbildung gemeinsam eine translatorische Bewegung quer zur Leitrichtung in beide Richtungen begrenzen; die Öffnungen der Hinterschnitte der Aufnahmen weisen dann zueinander.

Alternativ können die beiden Aufnahmen hintereinander, typischerweise fluchtend in Leitrichtung des Kabelträgers angeordnet sein. Bei dieser Ausgestaltung kann vorgesehen sein, dass der Klemmabschnitt aus einem durchgängigen Element besteht, etwa einem durchgängigen Draht.

Ferner kann vorgesehen sein, dass die beiden Aufnahmen an einer Tragvorrichtung angeordnet sind. Auch ist es möglich, dass je eine Tragvorrichtung jeweils eine der beiden Aufnahmen trägt, mithin, dass die erste Aufnahme an einer ersten Tragvorrichtung und die zweite Aufnahme an einer zweiten Tragvorrichtung angeordnet ist. Je nach Einbausituation und Ausführung der Klemmabschnitte bzw. der Aufnahmen ergeben sich unterschiedliche Vorteile der verschiedenen Konfigurationen.

Zum Befestigen des Kabelträgers an der Tragvorrichtung, mithin zum Einführen der Klemmabschnitte in die Aufnahmen, muss der Klemmabschnitt hinter den Hinterschnitt geführt werden. Hierzu wird in einer bevorzugten Ausgestaltung die Elastizität des Kabelträgers genutzt. Der Klemmabschnitt kann gegenüber dem restlichen Teil des Kabelträgers, jedenfalls bezüglich des anderen Klemmabschnittes, elastisch bewegbar sein, etwa zueinander gebracht oder gespreizt werden. Eine relative Bewegung der beiden Klemmabschnitte zueinander ist auf diese Weise möglich. Die mögliche, bevorzugt vollständig elastische Bewegung ist dabei so groß, dass ein Herumführen der Klemmabschnitte um den Hinterschnitt der jeweiligen Aufnahme im Rahmen der Montage herum möglich ist. Durch die Elastizität zwischen den Klemmabschnitten stellen sich diese selbständig zurück und zwar dergestalt, dass sie hinter den Hinterschnitten der Aufnahmen zu liegen kommen.

Um die Elastizität zwischen den Klemmabschnitten bereitzustellen, können der Kabelträger, die Klemmabschnitte oder die Anbindung der Klemmabschnitte an den Kabelträger elastisch bewegbar sein. Sind die Klemmabschnitte beispielsweise aus einem Draht bereitgestellt, kann die elastische Bewegung eine Biegung des Drahtes quer zur Drahtlängsrichtung sein. Auch eine U-förmige Verbindung der Klemmabschnitte ist möglich, wobei dann die elastische Bewegung eine Biegung der Schenkel und des Steges ist. Eine elastische Bewegung kann durch eine Vielzahl an Materialien, etwa Kunststoffe oder Metallwerkstoffe, etwa Stahl, ermöglicht werden.

In einer anderen Ausgestaltung des Montagevorganges ist vorgesehen, den Kabelträger zu verschwenken, sodass sie während der Montage nicht in Leitrichtung weist, sondern unter einem Winkel hierzu. Durch das Verschwenken des Kabelträgers kann der Abstand zwischen den beiden Klemmabschnitten bezogen auf die Richtung des Abstandes der beiden Aufnahmen verändert werden. Weisen die Hinterschnitte der beiden Aufnahmen etwa zueinander und sind die beiden Aufnahmen in einer Ebene quer zur Leitrichtung des Kabelträgers angeordnet und auch die Klemmabschnitte in einer solchen Anordnung, kann durch ein Verschwenken des Kabelträgers der Abstand zwischen den Klemmabschnitten bezogen auf die Richtung des Abstandes zwischen den beiden Aufnahmen verkleinert werden. Ist der Kabelträger verschwenkt und somit der Abstand der Klemmabschnitte in Richtung des Abstandes der Aufnahmen verringert, können die Klemmabschnitte in um die zueinander weisenden Hinterschnitte herumgebracht werden. Anschließend wird der Kabelträger in Leitrichtung ausgerichtet: der Abstand der Klemmabschnitte in Richtung des Abstandes der Aufnahmen vergrößert sich und die Klemmabschnitte werden hinter den Hinterschnitten der Aufnahmen fixiert.

Sind die beiden Aufnahmen hintereinander in Leitrichtung angeordnet, insbesondere an zwei verschiedenen Tragvorrichtungen, und die Aufnahmerücken verhindern eine translatorische Bewegung quer zur Leitrichtung, kann der Kabelträger ebenfalls an den Tragvorrichtungen durch ein Verschwenken befestigt werden: In diesem Fall wird in einem ersten Schritt der erste Klemmabschnitt in die erste Aufnahme eingesetzt werden. Anschließend wird der Kabelträger verschwenkt und zwar um die erste Aufnahme als Drehpunkt, bis dass der zweite Klemmabschnitt hinter den Hinterschnitt der zweiten Aufnahme bringbar ist. Dann wird der zweite Klemmabschnitt in die zweite Aufnahme eingebracht und der Kabelträger in Leitrichtung ausgerichtet, sodass auch der zweite Klemmabschnitt hinter dem Hinterschnitt zu liegen kommt und damit der Kabelträger insgesamt an den beiden Tragvorrichtungen befestigt ist.

Auch eine Kombination der vorstehend beschriebenen Konfigurationen durch eine Vielzahl entsprechender Aufnahmen ist möglich.

Bei all diesen Montagemöglichkeiten können die Aufnahmen, insbesondere in Hinterschnitt- und Montagerichtung, steif ausgebildet sein. Sind die Aufnahmen in ein in Hinterschnittrichtung ein hohes Widerstandsmoment aufweisendes Blech eingebracht, ist dies von besonderem Vorteil. Bei der Montage wird sich die Elastizität des Kabelträgers und/oder der relativ große Abstand zwischen zwei Aufnahmen und damit einhergehend einem relativ kleinen Verdrehwinkel des Kabelträgers zunutze gemacht.

In einer bevorzugten Ausgestaltung ist vorgesehen, dass der Kabelträgereine Gitterkabelrinne ist. Eine Gitterkabelrinne ist eine aus einem Drahtgerüst hergestellte Kabelrinne. Ohnehin vorhandene Abschnitte des Drahtes der Gitterkabelrinne können als Klemmabschnitt fungieren, insbesondere in Leitrichtung weisende Drahtabschnitte der Gitterkabelrinne, sodass die entlang der Gitterkabelrinne eine Vielzahl an möglichen Klemmabschnitten bereitgestellt sind. Eine ggf. notwendige Elastizität der Klemmabschnitte zueinander für die Montage ist durch die Gitterstruktur gegeben und zwar insbesondere in Drahtrichtung der Gitterstruktur.

Die Tragvorrichtungen können mehrere erste und/oder zweite Aufnahmen aufweisen, um die Festigkeit der Verbindung "Tragvorrichtung-Kabelträger" zu erhöhen. Auch können zu dem Kabelträger weisende Aussparungen in den Tragvorrichtungen vorgesehen sein, in die von dem Kabelträger abragende Vorsprünge eingreifen können, wodurch die Gefahr des seitlichen Herabfallens weiter minimiert wird.

Die Erfindung wird anhand der beiliegenden Figuren im Rahmen eines Ausführungsbeispiels näher erläutert. Es zeigen:
- **Fig. 1:**: Eine dreidimensionale Ansicht eines Kabeltragsystems,
- **Fig. 2:**: eine Seitenansicht auf eine Tragvorrichtung des Kabeltragsystems, auf dem zur Darstellung eine unmittelbar vor der Tragvorrichtung geschnittener Kabelträger befestigt ist,
- **Fig. 3** - **5:**: Detailansichten zu verschiedenen Seitenansichten der Tragvorrichtung und des Kabelträgers,
- **Fig. 6:**: eine dreidimensionale Draufsicht auf das Kabeltragsystem und
- **Fig. 7:**: eine Detailansicht einer Universalaufnahme.

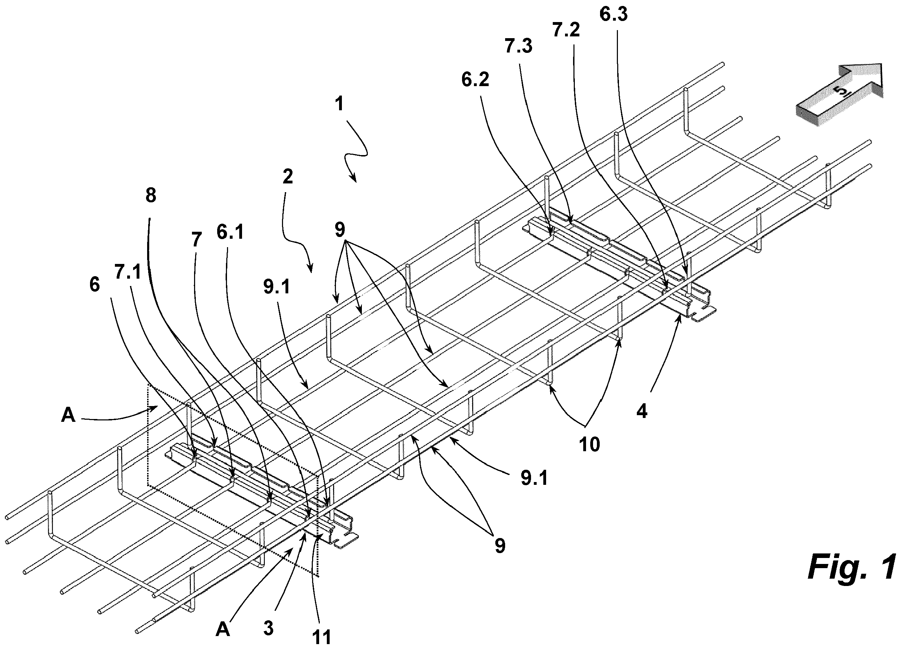

Figur 1 zeigt ein Kabeltragsystem 1. Das Kabeltragsystem 1 umfasst einen Kabelträger 2, hier ausgeführt als Gitterkabelrinne und zwei den Kabelträger 2 unterseitig abstützende Tragvorrichtungen 3, 4. Die Tragvorrichtungen 3, 4 sind in dieser Ausgestaltung als nach oben offene C-Profile und gleich ausgeführt. Die Tragvorrichtungen 3, 4 sind auf nicht näher dargestellte Weise an einer Wand befestigt und somit als Ausleger gestaltet. Der Kabelträger 2 ist mit ihrer Längserstreckung in eine Leitrichtung 5 ausgerichtet; in diese Richtung werden auf den Kabelträger 2 gelegte, nicht näher dargestellte Kabel geleitet.

In die Schenkel der Tragvorrichtungsprofile der Tragvorrichtungen 3, 4 sind Aufnahmen 6, 6.1, 6.2, 6.3, 7, 7.1, 7.2, 7.3 eingebracht, die nachstehend näher beschrieben sind und den Kabelträger 2 auf den Tragvorrichtungen 3, 4 befestigen. Zusätzlich sind Aussparungen 8 (in Figur 1 nur beispielhaft gekennzeichnet) in den Tragvorrichtungen 3, 4 vorgesehen, die entsprechend dem als Gitterkabelrinne ausgebildeten Kabelträger 2 Raum für den Kabelträger 2 bildende Elemente geben.

Der als Gitterkabelrinne ausgeführte Kabelträger 2 wird gebildet durch in Leitrichtung 5 ausgerichtete Drahtstangen 9, 9.1, 9.2, welche in einem vorbestimmten Abstand U-förmig zueinander angeordnet sind. Quer zu diesen in Leitrichtung 5 weisenden Drahtstangen 9, 9.1, 9.2 sind U-förmig gekantete Stützelemente 10 (in Figur 1 nur beispielhaft gekennzeichnet) angeordnet und an den jeweiligen Kreuzstellen mit den in Leitrichtung 5 weisenden Drahtstangen 9, 9.1, 9.2 verbunden, etwa durch einen Fügeprozess. Insgesamt ergibt sich eine gitterförmige Struktur, die in ihrem Querschnitt U-förmig ausgebildet ist und in deren bereitgestellten, nach oben offenen Raum Kabel und Leitungen hineingelegt werden können. Durch die Stützelemente 10 sind die Kabel und Leitungen unterseitig abgestützt; die Stützelemente 10 sind durch die Drahtstangen 9, 9.1, 9.2 gegenüber den Tragvorrichtungen 3, 4 abgestützt.

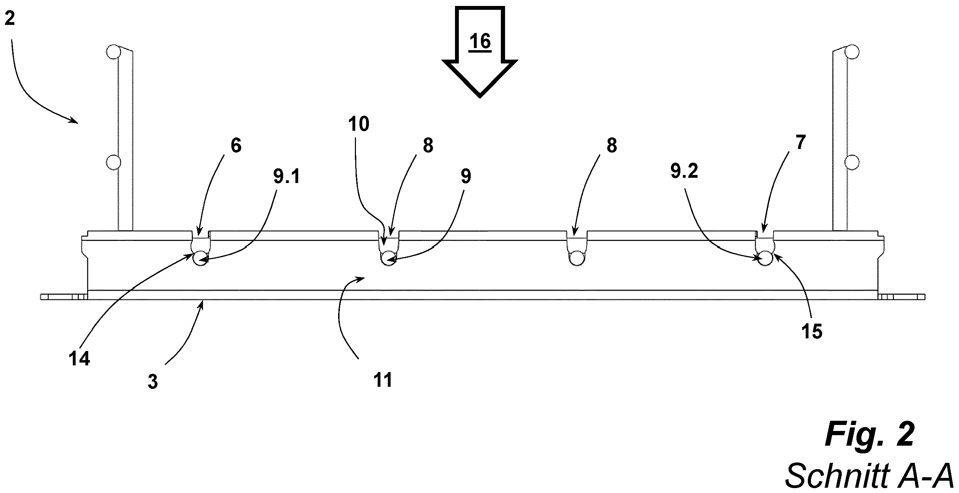

Figur 2 zeigt eine Seitenansicht der Tragvorrichtung 3 mit dem auf der Tragvorrichtung 3 befestigten Kabelträger 2 in einer Schnittansicht (Schnitt A-A). Der Schnitt ist schematisch in Figur 1 eingezeichnet.

Zu erkennen ist eine Tragvorrichtung 3, respektive ein Schenkel 11 der Tragvorrichtung 3, ein Stützelement 10 des Kabelträgers 2 sowie in Leitrichtung 5 ausgerichtete Drahtstangen 9, 9.1, 9.2. Jeweils ein Abschnitt einer in Leitrichtung 5 weisende Drahtstange 9.1, 9.2 ist in eine Aufnahme 6, 7 eingesetzt. Weitere in Leitrichtung 5 weisenden und den Boden des Kabelträgers 2 bildende Drahtstangen 9 sind in entsprechende Aussparungen 8 der Tragvorrichtung 3 eingesetzt. In diesem Ausführungsbeispiel sind die in Leitrichtung 5 weisenden Drahtstangen 9, 9.1, 9.2, welche die Tragvorrichtung 3 kontaktieren, unterseitig durch diesen abgestützt.

Die Aufnahmen 6, 7 sind in diesem Ausführungsbeispiel bezüglich ihrer Kontur spiegelbildlich, gespiegelt um die Hochachse, ausgestaltet. Sie umfassen einen Hinterschnitt 12, 13. Dieser Hinterschnitt 12, 13 überragt abschnittsweise die in Leitrichtung 5 ausgerichteten Drahtstangen 9.1, 9.2, welche hier im Bereich der Aufnahmen 6, 7 als Klemmabschnitte 14, 15 ausgebildet sind.

Die beiden Klemmabschnitte 14, 15 sind auch über die Stützelemente 10 an ihren Endseiten miteinander verbunden und relativ zueinander in Hinterschnittrichtung elastisch bewegbar; in diesem Ausführungsbeispiel somit zueinander hin. Bei der Montage des Kabelträgers 2 auf der Tragvorrichtung 3 wird der Kabelträger 2 von oben auf die Tragvorrichtung 3 aufgesetzt und in Montagerichtung 16 heruntergedrückt, sodass die beiden Klemmabschnitte 14, 15 zueinander und über die Hinterschnitte 12, 13 hinweg bewegt und aufgrund der durch diese Bewegung in den Kabelträger 2 - respektive in die Stützelemente 10 sowie die in Leitrichtung 5 weisende Drahtabschnitte zwischen Klemmabschnitten 14, 15 und Stützelementen 10 - eingebrachte Vorspannung hinter dem Hinterschnitt zu liegen kommen. Hinter den Hinterschnitten 12, 13 sind die Klemmabschnitte 14, 15 und somit der Kabelträger 2 an der Tragvorrichtung 3 entgegen der Montagerichtung 16 befestigt.

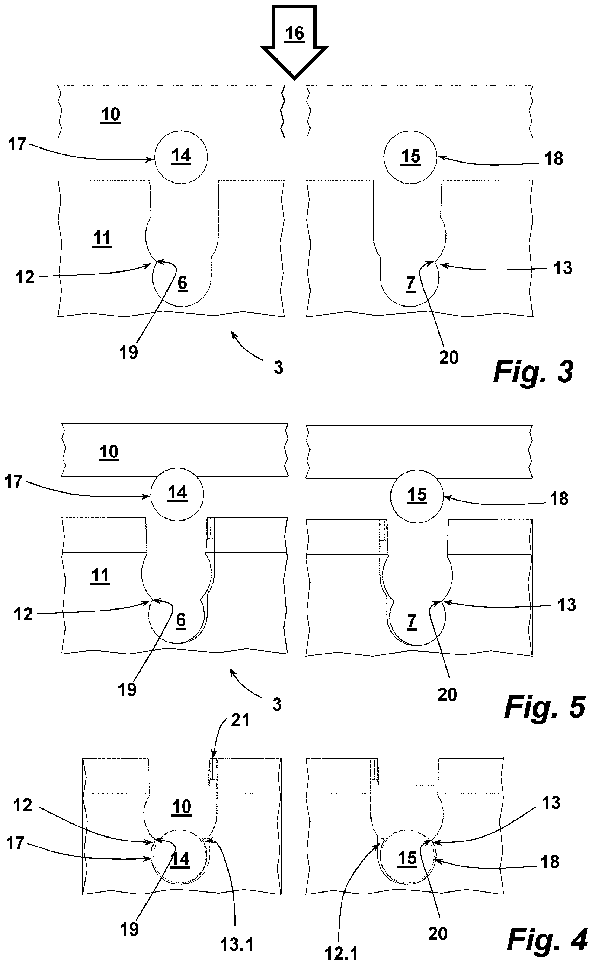

Figuren 3 bis 5 zeigen die Aufnahmen 6, 7 in verschiedenen Ansichten und weiteren Details. Die Aufnahmen 6, 7 sind jeweils in einer Detailansicht und unter Auslassung der seitlich dazwischenliegenden Teile der Tragvorrichtung 3 bzw. des Kabelträgers 2 dargestellt. Die Montagerichtung 16 ist jeweils von oben.

Figur 3 zeigt lediglich einen Schenkel 11 der Tragvorrichtung 3 mit einem Teil des Kabelträgers 2. Der Schenkel 11 ist dergestalt orientiert, dass seine flächige Erstreckung im Wesentlichen in Montagerichtung 16 weist.

In den Schenkel 11 sind die Aufnahmen 6, 7 eingebracht. Die hier zueinander weisenden Hinterschnitte 12, 13 der in den Schenkel 11 eingebrachten Aufnahmen 6, 7 verfügen über entgegengesetzt zur Montagerichtung 16 weisende Einführschrägen; hier durch Rundungen bereitgestellt.

Beide Aufnahmen 6, 7 sind singulär betrachtet dergestalt ausgebildet, dass ihre lichte Weite in Montagerichtung 16 bezogen auf die durch die in Leitrichtung 5 weisenden Drahtstangen 9.1, 9.2 bereitgestellten Klemmabschnitte 14, 15 soweit ist, dass diese lose einsetzbar sind. Da es sich bei den hier ausgestalteten Klemmabschnitten 14, 15 um kreisrunde Drahtabschnitte handelt, ist die lichte Weite der Aufnahmen 6, 7 jeweils größer als der Durchmesser der Klemmabschnitte 14, 15. Der Abstand der nach au-ßen weisenden Mantelfläche 17, 18 der Klemmabschnitte 14, 15 ist jedoch größer als der Abstand der zueinander weisenden Enden 19, 20 der Hinterschnitte 12, 13. Um die Klemmabschnitte 14, 15 hinter die Hinterschnitte 12, 13 zu bringen, werden die beiden Klemmabschnitte 14, 15 wie vorstehend beschrieben zueinander elastisch bewegt. Hat die äußere Mantelfläche 17, 18 des jeweiligen Klemmabschnittes 14, 15 die Enden 19, 20 der Hinterschnitte 12, 13 überwunden, sind die Klemmabschnitte 14, 15 aufgrund der Vorspannung in dem Kabelträger 2 bestrebt, ihre Initiallage -jetzt hinter den Hinterschnitten 12, 13 - wieder einzunehmen, sodass im Idealfall keine Vorspannung in der Verbindung zwischen den beiden Klemmabschnitten 14, 15 mehr besteht. Dieser Zustand ist in Figur 4 dargestellt.

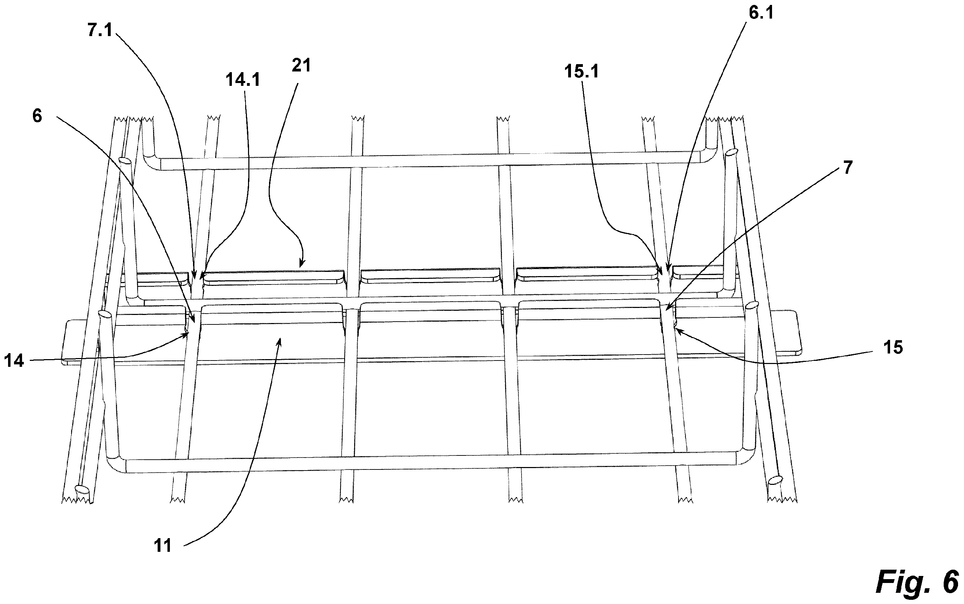

Figur 5 zeigt die Tragvorrichtung 3 insgesamt in einer Seitenansicht mit dem darauf aufgesetzten Kabelträger 2. Diese wird im Zusammenhang mit Figur 6 erläutert. Figur 6 ist eine dreidimensionale Schrägdraufsicht auf die Tragvorrichtung 3 mit dem befestigten Kabelträger 2. Zu erkennen ist einerseits der in Figur 3 singulär dargestellte Schenkel 11 als auch der gegenüberliegende Schenkel 21 des die Tragvorrichtung 3 bereitstellenden U-Profils. Der in den Figuren hintere Schenkel 21 weist fluchtend mit der ersten Aufnahme 6 in dem ersten Schenkel 11 eine weitere zweite Aufnahme 7.1 auf, deren Hinterschnitt 13.1 entgegengesetzt zu dem Hinterschnitt 12 der ersten Aufnahme 6 ist. Diese weitere zweite Aufnahme 7.1 ist ausgestaltet wie die zweite Aufnahme 7 in dem erstbeschriebenen Schenkel 11. Der gegenüberliegende Schenkel 21 weist - auch fluchtend mit der zweiten Aufnahme 7 in dem Schenkel 11 - eine weitere erste Aufnahme 6.1 auf, entsprechend einen Hinterschnitt 12.1 aufweisend, der ebenfalls entgegengesetzt zu dem Hinterschnitt 13 der zweiten Aufnahme 7 ausgerichtet ist. Diese Aufnahme 6.1 ist gleich aufgebaut wie die erste Aufnahme 6 in dem zuerst beschriebenen Schenkel 11.

Als Klemmabschnitte 14.1, 15.1 in diesen weiteren Aufnahmen 6.1, 7.1 dienen hier weitere Abschnitte der Drahtstangen 9.1, 9.2. Die Drahtabschnitte der in Leitrichtung 5 weisenden Drahtstangen 9.1, 9.2, die zwischen den in den Aufnahmen 6, 7.1; 7, 6.1 gehaltenen Klemmabschnitten 14, 14.1; 15, 15.1 angeordnet sind, stellen die notwendige Elastizität bereit, damit die Klemmabschnitte 14, 14.1; 15, 15.1 hinter die Hinterschnitte 12, 13.1; 13, 12.1 der Aufnahmen 6, 7.1; 7, 6.1 eingebracht werden können. Auf diese Weise ist der Kabelträger 2 weiter und besonders stabil an der Tragvorrichtung 3 befestigt.

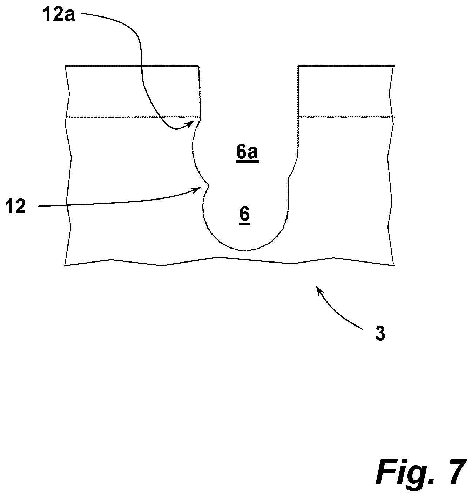

Anhand Figur 7 wird nachstehend das Konzept der Universalaufnahme dargestellt: Die Tragvorrichtung 3, von dem ein Ausschnitt dargestellt ist, umfasst nicht nur eine Aufnahme 6, sondern eine weitere Aufnahme 6a, die in diesem Ausführungsbeispiel oberhalb der Aufnahme 6 angeordnet ist. Die Aufnahme 6a ist für einen hier nicht näher dargestellten größeren Klemmabschnitt, als dieser in der unteren Aufnahme 6 vorgesehen ist, ausgestaltet. Auch diese größere Aufnahme 6a weist einen Hinterschnitt 12a auf. Die lichte Weite in Montagerichtung (von oben) ist jedoch in der oberen Aufnahme 6a größer als in der unteren, kleineren Aufnahme 6. Ansonsten gelten die vorgeschriebenen Mechanismen für die größere Aufnahme 6a gleichermaßen.

Die Erfindung ist anhand eines Ausführungsbeispiels näher erläutert worden. Ohne den Schutzbereich, gegeben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Erläuterungen näher beschrieben werden müssten.

### Bezugszeichenliste

- 1: Kabeltragsystem
- 2: Kabelträger
- 3, 4: Tragvorrichtung
- 5: Leitrichtung
- 6, 6.1, 6,2, 6.3, 6a: Aufnahme erster Art
- 7, 7.1, 7.2, 7.3: Aufnahme zweiter Art
- 8: Aussparung
- 9, 9.1, 9.2: Drahtstangen
- 10: Stützelement
- 11: Schenkel der Tragvorrichtung
- 12, 12.1, 12a, 13, 13.1: Hinterschnitt
- 14, 14.1, 15, 15.1: Klemmabschnitt
- 16: Montagerichtung
- 17, 18: Nach außen weisende Mantelfläche des Klemmabschnitts
- 19, 20: Nach innen weisendes Ende des Hinterschnitts
- 21: Schenkel der Tragvorrichtung

## Patentansprüche

1. Kabeltragsystem (1) umfassend einen in eine Leitrichtung (5) ausgerichteten Kabelträger (2) und zumindest zwei den Kabelträger (2) abstützende Tragvorrichtungen (3, 4), wobei an den Tragvorrichtungen (3, 4) zumindest zwei hinterschnittene Aufnahmen (6, 6.1, 6.2, 6.3, 6a; 7, 7.2, 7.3) vorgesehen sind und wobei der Kabelträger (2) zwei Klemmabschnitte (14, 14.1; 15, 15.1) aufweist, die in jeweils eine Aufnahme (6, 6.1, 6.2, 6.3, 6a; 7, 7.2, 7.3) eingreifen, wobei die Hinterschnitte (12, 12.1, 12a; 13, 13.1) der Aufnahmen (6, 6.1, 6.2, 6.3, 6a; 7, 7.2, 7.3) die Klemmabschnitte (14, 14.1; 15, 15.1)jeweils entgegen der vorgesehenen Montagerichtung (16) zum Befestigen des Kabelträgers (2) an der Tragvorrichtung (3, 4) zumindest abschnittsweise überragen und eine erste Aufnahme (6, 6.1, 6.3, 6a) einen in eine erste Richtung weisenden Hinterschnitt (12, 12.1, 12a) und eine zweite Aufnahme (7, 7.1, 7.2, 7.3) einen in eine zweite, zu der ersten Richtung entgegengesetzten Richtung weisenden Hinterschnitt (13, 13.1) aufweist.

2. Kabeltragsystem nach Anspruch 1, **dadurch gekennzeichnet, dass** die minimale lichte Weite der Aufnahmen (6, 6.1, 6.2, 6.3, 6a; 7, 7.2, 7.3) größer ist als der Durchmesser des in die Aufnahme (6, 6.1, 6.2, 6.3, 6a; 7, 7.2, 7.3) eingesetzten Klemmabschnittes (14, 14.1; 15, 15.1).

3. Kabeltragsystem nach Anspruch 1 oder 2, **dadurch gekennzeichnet, dass** zumindest eine Aufnahme (6, 6.1, 6.2, 6.3, 6a; 7, 7.2, 7.3) in einen Blechabschnitt der Tragvorrichtung (3, 4) eingebracht ist, dessen flächige Erstreckung im Wesentlichen parallel zur Montagerichtung (16) ausgerichtet ist und in welche Aufnahme (6, 6.1, 6.2, 6.3, 6a; 7, 7.2, 7.3) der Klemmabschnitt (14, 14.1, 15, 15.1) quer zur flächigen Erstreckung des Blechabschnittes eingesetzt ist.

4. Kabeltragsystem nach einem der Ansprüche 1 bis 3, **dadurch gekennzeichnet, dass** die Tragvorrichtungen (3, 4) den Kabelträger (2) unterseitig abstützen und die Montagerichtung (16) von oben ist.

5. Kabeltragsystem nach einem der Ansprüche 1 bis 4, **dadurch gekennzeichnet, dass** in Montagerichtung (16) der Hinterschnitt (12, 12.1; 13, 13.1) zumindest einer Aufnahme (6, 6.1, 6.2, 6.3; 7, 7.2, 7.3) über eine Einführschräge verfügt.

6. Kabeltragsystem nach einem der Ansprüche 1 bis 5, **dadurch gekennzeichnet, dass** der Hinterschnitt (12, 12.1, 12a; 13, 13.1) in eine Richtung quer zur Leitrichtung (5) des Kabelträgers (2) weist.

7. Kabeltragsystem nach einem der Ansprüche 1 bis 6, **dadurch gekennzeichnet, dass** die beiden Aufnahmen (6, 7; 6.1, 7.1; 6.2, 7.2; 6.3, 7.3) nebeneinander quer zur Leitrichtung (5) angeordnet sind.

8. Kabeltragsystem nach einem der Ansprüche 1 bis 7, **dadurch gekennzeichnet, dass** die beiden Aufnahmen (6, 7.1, 6.2, 7.3; 7, 6.1, 7.2, 6.3) hintereinander in Leitrichtung (5) des Kabelträgers (2) angeordnet sind.

9. Kabeltragsystem nach einem der Ansprüche 1 bis 8, **dadurch gekennzeichnet, dass** entweder die beiden Aufnahmen (6, 6.1, 6a, 7, 7.1; 6.2, 6.3, 7.2, 7.3) an einer Tragvorrichtung (3, 4) angeordnet sind oder die erste Aufnahme an einer ersten Tragvorrichtung und die zweite Aufnahme an einer zweiten Tragvorrichtung angeordnet ist.

10. Kabeltragsystem nach einem der Ansprüche 1 bis 9, **dadurch gekennzeichnet, dass** die Klemmabschnitte (14, 14.1; 15, 15.1) gegeneinander elastisch relativ zueinander in Hinterschnittrichtung verstellbar sind.

11. Kabeltragsystem nach einem der Ansprüche 1 bis 10, **dadurch gekennzeichnet, dass** der Kabelträger, wenn der erste Klemmabschnitt in die erste Aufnahme eingesetzt ist, im Bereich des zweiten Klemmabschnittes in Hinterschnittrichtung der zweiten Aufnahme bewegbar ist, sodass der zweite Klemmabschnitt hinter den Hinterschnitt der zweiten Aufnahme bringbar ist.

12. Kabeltragsystem nach einem der Ansprüche 1 bis 11, **dadurch gekennzeichnet, dass** der Kabelträger (2) als Gitterkabelrinne und die Klemmabschnitte (14, 14.1; 15, 15.1) durch in Leitrichtung (5) verlaufende Drahtstangen (9.1, 9.2) bereitgestellt sind.

13. Kabeltragsystem nach einem der Ansprüche 1 bis 12, **dadurch gekennzeichnet, dass** die Tragvorrichtung (3, 4) als nach oben offenes Profil, bevorzugt als U- oder C-Profil ausgeführt ist.

14. Kabeltragsystem nach Anspruch 13, insbesondere in seinem Rückbezug auf Anspruch 3, **dadurch gekennzeichnet, dass** die Aufnahme (6, 6.1, 6.2, 6.3, 6a; 7, 7.2, 7.3) in einen Schenkel (11, 21) des Profils eingebracht ist.

15. Tragvorrichtung (3, 4) für ein Kabeltragsystem (1) mit den die Tragvorrichtung (3, 4) betreffenden Merkmalen eines der Ansprüche 1 bis 14.
